(19) Europäisches Patentamt
European Patent Office
Office européen des brevets

(11) **EP 4 738 194 A1**

(12) **EUROPÄISCHE PATENTANMELDUNG**

(43) Veröffentlichungstag:
06.05.2026   Patentblatt 2026/19

(21) Anmeldenummer: 24210615.1

(22) Anmeldetag: 04.11.2024

(51) Internationale Patentklassifikation (IPC):
*G06N 3/045* (2023.01)      *G06N 3/08* (2023.01)
*G06N 3/084* (2023.01)

(52) Gemeinsame Patentklassifikation (CPC):
**G06N 3/045; G06N 3/044; G06N 3/08; G06N 3/084**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Robert Bosch GmbH
70442 Stuttgart (DE)**

(72) Erfinder:
• **Gerwinn, Sebastian
  71229 Leonberg (DE)**
• **Moshkovitz, Michal
  Tel-Aviv (IL)**
• **Schiegg, Martin
  70825 Korntal-Muenchingen (DE)**

Bemerkungen:
Geänderte Patentansprüche gemäss Regel 137(2) EPÜ.

(54) **VERFAHREN ZUM VORHERSAGEN EINES ZEITVERLAUFS EINER PHYSIKALISCHEN ZIELGRÖSSE MITTELS EINES MASCHINELLEN LERNMODELLS**

(57)   Verschiedene Aspekte betreffen ein Verfahren (100) aufweisend: Bereitstellen (102) multivariater Sensordaten, die für jede einer Vielzahl von physikalischen Größen jeweilige Sensordaten aufweisen, welche einen Zeitverlauf der physikalischen Größe repräsentieren, wobei jeder physikalischen Größe eine jeweilige Textbeschreibung zugeordnet ist, welche diese und deren eine Messumgebung beschreibt; für jede physikalische Größe (104): Aufteilen der jeweiligen Sensordaten in eine jeweilige Vielzahl von Sensordatensegmenten; für jedes Sensordatensegment der Vielzahl von Sensordatensegmenten: Ermitteln einer jeweiligen Sensordatensegmentrepräsentation, welche das Sensordatensegment repräsentiert und welche eine vordefinierte Dimension aufweist, Ermitteln eines jeweiligen Eingabeelementes unter Verwendung der jeweiligen Sensordatensegmentrepräsentation, zeitbezogener Positionsinformationen, welche eine Position des Sensordatensegments innerhalb des Zeitraums repräsentieren, und der jeweiligen Textbeschreibung der physikalischen Größe; Vorhersagen (106) des Zeitverlaufs der physikalischen Zielgröße mittels des maschinellen Lernmodells in Reaktion auf eine Eingabe aller Eingabeelemente und mindestens einer Zielgrößen-Abfrage, welche eine Position des vorherzusagenden Zeitverlaufs innerhalb des Zeitraums und eine Textbeschreibung der physikalischen Zielgröße repräsentiert, in das maschinelle Lernmodell.

100

**Fig. 1**

**Beschreibung**

Stand der Technik

Für verschiedene technische (z.B. physikalische oder chemische) Prozesse kann es wünschenswert sein, einen Zeitverlauf einer physikalischen Größe anhand multivariater Zeitreihendaten anderer physikalischer Größen vorherzusagen und/oder anhand der multivariaten Zeitreihendaten mehrerer physikalischer Größen eine Anomalie vorherzusagen. Zum Beispiel kann es wünschenswert sein, einen Gesundheitszustand (engl.: state-of-health) oder eine Wasserstoffbeladung einer Brennstoffzelle anhand eines Zeitverlaufs von Stromstärke und Spannung vorherzusagen, oder im Falle einer Bohrmaschine anhand eines Zeitverlaufs von Stromstärke und Spannung vorherzusagen, welches Material gebohrt wird, oder eine Anomalie anhand des Zeitverlaufs von Stromstärke und Spannung vorherzusagen, etc. Üblicherweise kann hierzu ein maschinelles Lernmodell für genau einen Anwendungsfall (z.B. für das Vorhersagen des Gesundheitszustands der Brennstoffzelle) trainiert werden.

Offenbarung der Erfindung

Die vorliegende Offenbarung bezieht sich auf ein Verfahren zum Vorhersagen eines Zeitverlaufs einer physikalischen Zielgröße mittels eines maschinellen Lernmodells anhand multivariater Sensordaten, wobei die multivariaten Sensordaten unregelmäßig abgetastete Sensordaten sein können.

Werden Sensordaten unterschiedlicher Sensoren erfasst, so können diese voneinander verschiedene Abtastraten aufweisen. Auch können in manchen Sensordaten Datenpunkte fehlen (z.B. aufgrund eines Messfehlers oder da diese aufgrund einer zu hohen Unsicherheit entfernt werden, etc.). Auch können Zeitabschnitte, in denen Sensordaten vorliegen, voneinander verschiedene Zeitdauern aufweisen. Anschaulich kann es vorkommen, dass nicht jeder Datenpunkt in ersten Sensordaten bijektiv einem Datenpunkt in von den ersten Sensordaten verschiedenen zweiten Sensordaten zugeordnet werden kann.

Das hierin beschriebene Verfahren ermöglicht die Vorhersage des Zeitverlaufs der physikalischen Zielgröße auch in solchen Fällen unregelmäßiger Sensordaten. Dies wird beispielsweise dadurch erreicht, dass die Sensordaten in Sensordatensegmente aufgeteilt werden und dann für jedes Sensordatensegment eine jeweilige Sensordatensegmentrepräsentation ermittelt wird, die für alle Sensordatensegmente die gleiche vordefinierte Dimension aufweist. Damit ist die Dimension Sensordatensegmentrepräsentation von der Regelmäßigkeit (z.B. der Abtastrate, dem Vorhandensein von Datenpunkten, etc.) der Datenpunkte des Sensordatensegmentes unabhängig.

Auch kann das hierin beschriebene maschinelle Lernmodell für die Vorhersage einer jeweiligen physikalischen Zielgröße einer Vielzahl von verschiedenen Aufgaben mit zumindest teilweise unterschiedlichen physikalischen Größen trainiert worden sein. Dadurch können beispielsweise die physikalischen Gesetze, welche über die verschiedenen Aufgaben hinweg gelten, effizient gelernt worden sein. Ein solches Trainieren ist gerade dadurch erst möglich, dass das hierin beschriebene Verfahren unregelmäßiger multivariate Sensordaten verarbeiten kann.

Verschiedene Aspekte betreffen ein Verfahren zum Vorhersagen eines Zeitverlaufs einer physikalischen Zielgröße mittels eines maschinellen Lernmodells, das Verfahren aufweisend: Bereitstellen multivariater Sensordaten, die einem Zeitraum zugeordnet sind und für jede physikalische Größe einer Vielzahl von physikalischen Größen jeweilige Sensordaten aufweisen, welche einen Zeitverlauf der physikalischen Größe in dem Zeitraum repräsentieren, wobei jeder physikalischen Größe eine jeweilige Textbeschreibung zugeordnet ist, welche die physikalische Größe (und optional ferner eine Messumgebung, in der die jeweiligen Sensordaten erfasst wurden) (als Text) beschreibt; für jede physikalische Größe der Vielzahl von physikalischen Größen: Aufteilen der jeweiligen Sensordaten in eine jeweilige Vielzahl von (z.B. disjunkten) Sensordatensegmenten; für jedes Sensordatensegment der Vielzahl von Sensordatensegmenten: Ermitteln einer jeweiligen Sensordatensegmentrepräsentation, welche das Sensordatensegment repräsentiert und welche (unabhängig von einer Anzahl an Datenpunkten des Sensordatensegmentes) eine vordefinierte Dimension aufweist, Ermitteln eines jeweiligen Eingabeelementes unter Verwendung der jeweiligen Sensordatensegmentrepräsentation, zeitbezogener Positionsinformationen, welche eine (z.B. zeitliche) Position des Sensordatensegments innerhalb des Zeitraums repräsentieren, und der jeweiligen Textbeschreibung der physikalischen Größe; Vorhersagen des Zeitverlaufs der physikalischen Zielgröße mittels des maschinellen Lernmodells in Reaktion auf eine Eingabe aller Eingabeelemente und mindestens einer Zielgrößen-Abfrage, welche eine (z.B. zeitliche) Position des vorherzusagenden Zeitverlaufs innerhalb des Zeitraums und eine Textbeschreibung der physikalischen Zielgröße repräsentiert, in das maschinelle Lernmodell.

Im Folgenden werden verschiedene Ausführungsbeispiele angegeben.

Beispiel 1 ist das Verfahren zum Vorhersagen des Zeitverlaufs der physikalischen Zielgröße mittels des maschinellen Lernmodells wie voranstehend beschrieben.

Beispiel 2 ist eingerichtet gemäß Beispiel 1, wobei die jeweilige Vielzahl von Sensordatensegmenten zumindest einer physikalischen Größe zumindest zwei Sensordatensegmente mit einer voneinander verschiedenen Anzahl an Datenpunkten aufweist.

Dadurch, dass jedes Sensordatensegment auf die jeweilige Sensordatensegmentrepräsentation mit der vordefinierten Dimension abgebildet wird, haben alle Sensordatensegmentrepräsentationen diese vordefinierte Dimension unabhängig von der Dimension der Sensordatensegmente, wodurch die Sensordatensegmente voneinander verschiedene Dimensionen (z.B. Zeitdauern, Anzahl an Datenpunkten (z.B. aufgrund unterschiedlicher Abtastraten), skalare Werte und sogar gar keine Werte) aufweisen können. Anschaulich kann das Verfahren einen Zeitverlauf einer Zielgröße auch für heterogene, multivariate Sensordaten vorhersagen.

Beispiel 3 ist eingerichtet gemäß Beispiel 1 oder 2, wobei die zeitbezogenen Positionsinformationen einen Startzeitpunkt und einen Endzeitpunkt innerhalb des Zeitraums repräsentieren.

Da das hierin beschriebene Verfahren eine unterschiedliche Anzahl an Datenpunkten für jedes Sensordatensegment ermöglicht, kann zusätzlich zu dem Startzeitpunkt auch diese Zeitdauer (z.B. angegeben durch den Endzeitpunkt) mittels der zeitbezogenen Positionsinformationen angegeben werden.

Beispiel 4 ist eingerichtet gemäß einem der Beispiele 1 bis 3, wobei das maschinelle Lernmodell ein Transformer-Modell aufweist, dessen Encoder und/oder Decoder eine Aufmerksamkeitsschicht aufweist, welcher alle Eingabeelemente (also jedes Eingabeelementes einer jeden physikalischen Größe) zugeführt werden.

Dadurch, dass der Aufmerksamkeitseinheit alle Eingabeelemente (und nicht nur entweder die Eingabeelemente in Dimension der physikalischen Größen oder in Zeit-Dimension) zugeführt werden, kann das maschinelle Lernmodell komplexere Abhängigkeiten (z.B. aufgrund des vorherigen Trainierens) berücksichtigen, wodurch die Genauigkeit der Vorhersage erhöht wird. Auch können dadurch heterogene Sensordatenelemente, wie beispielsweise skalare Werte und/oder fehlende Werte in Kombination mit Zeitreihen, verwendet werden.

Beispiel 5 ist eingerichtet gemäß einem der Beispiele 1 bis 4, wobei die jeweilige Sensordatensegmentrepräsentation für ein Sensordatensegment mittels einer (mehrköpfigen) Aufmerksamkeitseinheit, welche einen gelernten sensordatensegment-spezifischen Parametervektor als Abfrage und das Sensordatensegment als Schlüssel und als Wert aufweist, ermittelt wird; und/oder wobei das jeweilige Eingabeelement unter Verwendung der jeweiligen Sensordatensegmentrepräsentation, einer jeweiligen Positionsrepräsentation und der jeweiligen Textbeschreibung der physikalischen Größe ermittelt wird, wobei die Positionsrepräsentation mittels einer (mehrköpfigen) Aufmerksamkeitseinheit, welche einen gelernten positions-spezifischen Parametervektor als Abfrage und die zeitbezogenen Positionsinformationen als Schlüssel und als Wert aufweist, ermittelt wird.

Beispiel 6 ist eingerichtet gemäß einem der Beispiele 1 bis 5, wobei das maschinelle Lernmodell ein Transformer-Modell aufweist, dessen ein oder mehrere Aufmerksamkeitsschichten im Encoder und/oder Decoder eine (mehrköpfige) Aufmerksamkeitseinheit aufweist, welcher die Zielgrößen-Abfrage zugeführt wird.

Dadurch ist beispielsweise kein trainierter freier Parameter als Eingabe erforderlich, wodurch das maschinelle Lernmodell die Vorhersage mit verringertem Rechenaufwand ermitteln kann. Auch ist beim Training kein Trainieren eines solchen freien Parameters erforderlich, so dass der Rechenaufwand beim Trainieren (und damit die dafür erforderliche Zeitdauer) verringert wird. Dadurch, dass die Zielgrößen-Abfrage die Textbeschreibung der physikalischen Zielgröße aufweist, wird die Genauigkeit der Vorhersage signifikant erhöht.

Beispiel 7 ist ein Verfahren zum Steuern eines technischen (z.B. physikalischen oder chemischen) Prozesses, das Verfahren aufweisend: Vorhersagen des Zeitverlaufs der physikalischen Zielgröße gemäß einem der Beispiele 1 bis 6 unter Verwendung bereitgestellter multivariater Sensordaten; und Steuern des technischen Prozesses unter Berücksichtigung der Vorhersage.

Beispiel 8 ist eine Steuervorrichtung, die eingerichtet ist, das Verfahren gemäß Beispiel 7 auszuführen.

Beispiel 9 ist ein System, aufweisend: eine Vorrichtung, die eingerichtet ist, den technischen Prozess auszuführen; ein oder mehrere Sensoren zum Erfassen der multivariaten Sensordaten; und die Steuervorrichtung gemäß Beispiel 8 zum Steuern des technischen Prozesses.

Beispiel 10 ist eine Datenverarbeitungseinheit, die eingerichtet ist, das Verfahren gemäß einem der Beispiele 1 bis 6 auszuführen.

Beispiel 11 ist ein Computerprogramm mit Befehlen, die, wenn sie durch einen Prozessor ausgeführt werden, bewirken, dass der Prozessor das Verfahren gemäß einem der Beispiele 1 bis 7 durchführt.

Beispiel 12 ist ein computerlesbares Medium, das Befehle speichert, die, wenn sie durch einen Prozessor ausgeführt werden, bewirken, dass der Prozessor das Verfahren gemäß einem der Beispiele 1 bis 7 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.

Figur 1 zeigt ein Ablaufdiagramm eines Verfahrens zum Vorhersagen eines Zeitverlaufs einer physikalischen Zielgröße gemäß verschiedenen Aspekten;
Figur 2 zeigt ein beispielhaftes System, an welchem das Verfahren ausgeführt werden kann;

Figur 3 zeigt einen erfassten Zeitverlauf einer beispielhaften physikalischen Größe und einen vorherzusagenden Zeitverlauf einer physikalischen Zielgröße;

Figur 4 zeigt ein Ermitteln eines Eingabeelementes gemäß verschiedenen Aspekten;

Figur 5 zeigt ein Vorhersagen des Zeitverlaufs der physikalischen Zielgröße mittels eines maschinellen Lernmodells gemäß verschiedenen Aspekten;

Figur 6 zeigt eine Aufmerksamkeitsschicht mit einstufiger Aufmerksamkeit gemäß verschiedenen Aspekten; und

Figur 7 zeigt eine Abfrage-basierte Weiterleitung beispielhaft für eine zweistufige Aufmerksamkeit.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

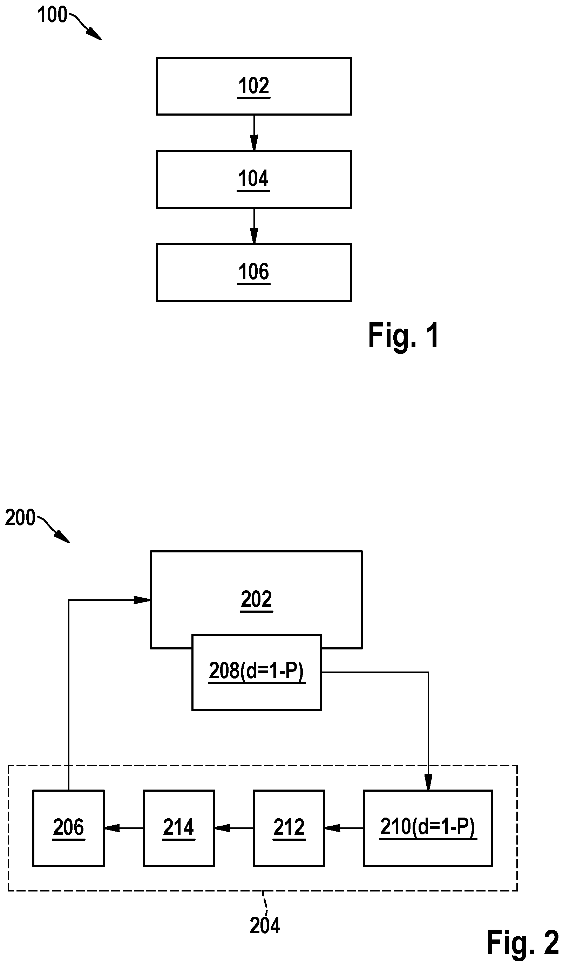

**FIG.1** zeigt ein Ablaufdiagramm eines Verfahrens 100 zum Vorhersagen eines Zeitverlaufs einer physikalischen Zielgröße gemäß verschiedenen Aspekten.

Das Verfahren 100 kann (in 102) ein Bereitstellen multivariater Sensordaten, die einem Zeitraum zugeordnet sind und für jede physikalische Größe einer Vielzahl von physikalischen Größen jeweilige Sensordaten aufweisen, welche einen Zeitverlauf der physikalischen Größe in dem Zeitraum repräsentieren, aufweisen. Jeder physikalischen Größe kann eine jeweilige Textbeschreibung zugeordnet sein, welche die physikalische Größe und eine Messumgebung, in der die jeweiligen Sensordaten erfasst wurden, (z.B. als Text) beschreibt.

Das Verfahren 100 kann (in 104) für jede physikalische Größe der Vielzahl von physikalischen Größen ein Aufteilen der jeweiligen Sensordaten in eine jeweilige Vielzahl von (z.B. disjunkten) Sensordatensegmenten aufweisen. Ferner kann das Verfahren 100 dann für jedes Sensordatensegment der Vielzahl von Sensordatensegmenten ein Ermitteln einer jeweiligen Sensordatensegmentrepräsentation, welche das Sensordatensegment repräsentiert und welche eine vordefinierte Dimension aufweist, und ein Ermitteln eines jeweiligen Eingabeelementes unter Verwendung der jeweiligen Sensordatensegmentrepräsentation, zeitbezogener Positionsinformationen, welche eine (z.B. zeitliche) Position des Sensordatensegments innerhalb des Zeitraums repräsentieren, und der jeweiligen Textbeschreibung der physikalischen Größe aufweisen.

Das Verfahren 100 kann (in 106) ein Vorhersagen des Zeitverlaufs der physikalischen Zielgröße mittels des maschinellen Lernmodells in Reaktion auf eine Eingabe aller Eingabeelemente und mindestens einer Zielgrößen-Abfrage, welche eine (z.B. zeitliche) Position des vorherzusagenden Zeitverlaufs innerhalb des Zeitraums und eine Textbeschreibung der physikalischen Zielgröße repräsentiert, in das maschinelle Lernmodell hinein aufweisen.

Das Verfahren kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z. B. implementiert) werden, die durch die Datenverarbeitungseinheit durchgeführt werden.

Das Verfahren ist also gemäß verschiedenen Ausführungen insbesondere computerimplementiert.

**FIG.2** zeigt ein System 200 gemäß verschiedenen Aspekten. Das System 200 kann eine Vorrichtung 202 aufweisen, die eingerichtet, einen technischen Prozesses auszuführen. Gemäß verschiedenen Aspekten kann die Vorrichtung 202 eine Robotervorrichtung (kurz: Roboter) sein, wie beispielsweise ein Industrieroboter in der Form eines Roboterarms zum Bewegen, Montieren oder Bearbeiten eines Werkstücks, zur Teilentnahme (engl.: bin picking), ein Fertigungsroboter, ein Wartungsroboter, ein Haushaltsroboter, ein Medizinroboter, ein Fahrzeug (z.B. ein zumindest teilweise automatisiertes Fahrzeug), ein Haushaltsgerät, ein Handwerksgerät (z.B. eine Bohrmaschine), eine Produktionsmaschine, ein persönlicher Assistent, ein Zugangs-Steuerungs-System etc., sowie jede andere Art von Robotervorrichtung. Gemäß verschiedenen Aspekten kann der technische Prozess ein physikalischer oder chemischer Prozesses sein, wie beispielsweise ein Herstellungsprozess (z.B. ein Herstellen eines Produkts oder Zwischenprodukts), ein Bearbeitungsprozess (z.B. ein Bearbeiten eines Werkstücks), ein Steuerprozess (z.B. ein Bewegen eines Roboterarms), ein Einstellungsprozess (z.B. ein Kalibrieren einer Messapparatur), etc.

Das System 200 kann eine Steuervorrichtung 204 aufweisen, die eingerichtet ist, den technischen Prozess (z.B. gemäß ein oder mehreren Steuerparametern 206) zu steuern. Der Begriff "Steuervorrichtung" (auch als "Steuereinrichtung" bezeichnet) kann als jede Art von logischer Implementierungseinheit verstanden werden, die beispielsweise eine Schaltung und/oder einen Prozessor beinhalten kann, der in der Lage ist, in einem Speichermedium gespeicherte Software, Firmware oder eine Kombination derselben auszuführen, und die Anweisungen, z.B. an ein Stellglied im vorliegenden Beispiel, erteilen kann. Die Steuervorrichtung kann beispielsweise durch Programmcode (z.B. Software) eingerichtet werden, den Betrieb des Systems 200 zu steuern.

Gemäß verschiedenen Aspekten können in einem Zeitraum multivariate Zeitreihen von Sensordaten (also multivariate Sensordaten) erfasst werden. Anschaulich können die multivariaten Sensordaten 210(d = 1 bis P) für jede physikalische Größe, d, einer Vielzahl von P physikalischen Größen (wobei P jede Ganzzahl größer als oder gleich eins sein kann), einen jeweiligen Zeitverlauf der physikalischen Größe in dem Zeitraum repräsentieren. Ein Sensor 208(d) zum Erfassen von Sensordaten kann hierbei beispielsweise ein Temperatursensor, ein Konzentrationssensor zum Erfassen ein oder mehrerer Elemente, ein Drucksensor, etc. sein. Die Sensordaten einer physikalischen Größe können nicht nur eine Ausgangsgröße des technischen Prozesses sein, sondern auch eine Eingangsgröße, welche gemäß den ein oder mehreren Steuerparametern 206 zum Steuern des technischen Prozesses angelegt wird, wie beispielsweise eine angelegte Spannung und/oder eine (z.B. aus einer angelegten Spannung resultierenden) Stromstärke. Die Sensordaten einer physikalischen Größe können in-situ oder ex-situ erfasst werden. Beispielsweise kann nach dem Ausführen des technischen Prozesses (z.B. ex-situ) eine Eigenschaft eines hergestellten Produkts (als Sensordaten) erfasst werden. Folglich wird verstanden, dass die multivariaten Sensordaten Zeitreihen physikalischer Größen aufweisen können, die in irgendeiner Art und Weise mit dem technischen Prozess zusammenhängen.

Gemäß verschiedenen Aspekten kann die Steuervorrichtung 204 eingerichtet sein, ein maschinelles Lernmodell 212 zu implementieren. Das maschinelle Lernmodell 212 kann eingerichtet sein, unter Verwendung der multivariaten Sensordaten 210(d = 1 bis D) einen (z.B. nicht erfassten) Zeitverlauf 214 (zumindest) einer physikalischen Zielgröße vorherzusagen. Die Steuervorrichtung 204 kann eingerichtet sein, die ein oder mehreren Steuerparameter 206 unter Berücksichtigung des vorhergesagten Zeitverlaufs 214 der physikalischen Zielgröße anzupassen (also den technischen Prozess zu steuern). Gemäß verschiedenen Aspekten kann die Steuervorrichtung 204 eingerichtet sein, eine Anomalie anhand des vorhergesagten Zeitverlaufs 214 der physikalischen Zielgröße zu ermitteln und den technischen Prozess entsprechend zu steuern (z.B. zu stoppen und ein Signal auszugeben, welches einen Benutzer der Vorrichtung 202 bezüglich der Anomalie informiert).

Im Folgenden werden verschiedene Aspekte des Verfahrens 100 beispielhaft für das technische System 200 detaillierter beschrieben.

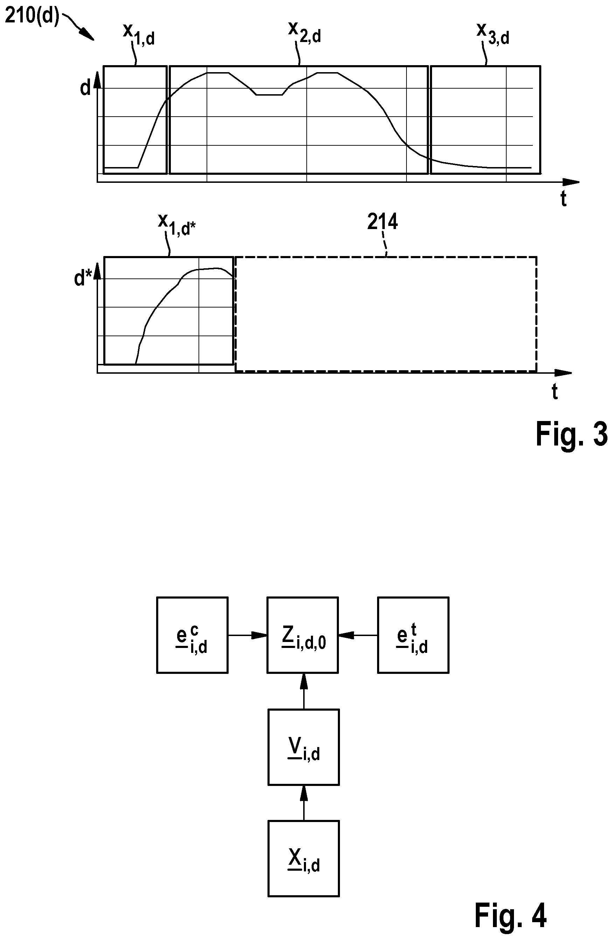

**FIG.3** zeigt einen erfassten Zeitverlauf 210(d) einer beispielhaften physikalischen Größe, d, in einem Zeitraum, einen in einem Abschnitt des Zeitraums erfassten Zeitverlauf der physikalischen Zielgröße, d\*, und den vorherzusagenden Zeitverlauf 214 der physikalischen Zielgröße, d\*.

In 104 können die Sensordaten jeder physikalischen Größe, d, in ein oder mehrere (z.B. eine Vielzahl von) (z.B. disjunkte) Sensordatensegmente, $x_{i,d}^{(s)} \in \mathbb{R}^{L_{i,d}}$, aufgeteilt werden. Anschaulich kann der Zeitverlauf 210(d) jeder physikalischen Größe, d, in ein oder mehrere Zeitabschnitte, $x_{i,d}^{(s)}$, unterteilt werden. Hierbei kann $L_{i,d}$ die Anzahl an Sensordatensegmenten angeben und kann größer als oder gleich eins sein. Gemäß verschiedenen Aspekten können die Sensordatensegmente, $x_{i,d}^{(s)}$, eine voneinander verschiedene Anzahl an Datenpunkten aufweisen. Die Anzahl an Datenpunkten kann auch als Anzahl an Zeitpunkten bezeichnet werden, wobei jedem Zeitpunkt ein Datenpunkt zugeordnet ist. Jedem Sensordatensegment, $x_{i,d}^{(s)}$, kann folglich einen Zeitabschnitt, $\tau_{k,i,d}^{(s)}$, mit einem Startzeitpunkt und einem Endzeitpunkt innerhalb des Zeitraums der Sensordaten zugeordnet sein. $\tau_{k,i,d}^{(s)}$ kann auch als zeitbezogene Positionsinformationen bezeichnet werden, da dies die zeitliche Position in dem Zeitraum angibt. Dieser Zeitabschnitt kann beispielsweise durch einen mehrdimensionalen Merkmalsvektor dargestellt werden. Beispielsweise kann jeder physikalischen Größe, d, ein zeitbezogener Positionsvektor $\tau_{i,d}^{(s)} = \{\tau_{k,i,d}^{(s)} | k = 1, ..., L_{i,d}\}$ zugeordnet sein oder werden.

Zur Veranschaulichung werden in verschiedenen Aspekten die physikalischen Größen der Vielzahl von physikalischen Größen als Kanal bzw. als Kanaldimension, c, bezeichnet. Jeder physikalischen Größe, d, kann eine jeweilige Textbeschreibung, TB, zugeordnet sein. Die Textbeschreibung kann die physikalische Größe, d, und eine Messumgebung, in der die zugehörigen Sensordaten erfasst wurden, (z.B. als Text) beschreiben. Eine hierin beschriebene Textbeschreibung einer physikalischen Größe, d, kann beispielsweise die physikalische Größe selbst, eine Beschreibung deren Signal, ein oder mehrere Informationen bezüglich eines Sensors mittels welchem die Sensordaten erfasst wurden, etc. aufweisen.

In manchen Aspekten kann zumindest ein Zeitabschnitt, $x_{i*,d*}^{(s)}$, der physikalischen Zielgröße, d*, zugehörig sein. In diesem Fall können Datenpunkte der physikalischen Zielgröße, d*, in dem Zeitabschnitt 214 als fehlende Werte betrachtet werden. In einem Beispiel können die multivariaten Sensordaten als zukünftige Sensordaten erachtet werden und die Vorhersage des Zeitverlaufs der physikalischen Zielgröße, d*, eine Vorhersage des zukünftigen Verlaufs sein. In anderen Aspekten können keine Sensordaten der physikalischen Zielgröße, d*, vorhanden sein, beispielsweise wenn ein komplettes Signal der physikalischen Zielgröße, d*, erzeugt werden soll. Dies wird auch als virtueller Sensor bezeichnet. Anschaulich können in diesem Fall alle Datenpunkte der physikalischen Zielgröße, d*, als fehlende Werte betrachtet werden.

Gemäß verschiedenen Aspekten kann für jedes Sensordatensegment, $x_{i,d}^{(s)}$, ein jeweiliges Eingabeelement, $Z_{i,d,0}$ ,ermittelt werden. **FIG.4** zeigt ein Ermitteln eines Eingabeelementes, $Z_{i,d,0}$, für ein Sensordatensegment, $x_{i,d}^{(s)}$, gemäß verschiedenen Aspekten.

Gemäß verschiedenen Aspekten kann eine Sensordatensegmentrepräsentation, $V_{i,d}$, ermittelt werden, welche das Sensordatensegment, $x_{i,d}^{(s)}$, repräsentiert und welche eine vordefinierte Dimension, D (d.h. $V_{i,d} \in \mathbb{R}^D$ ), aufweist (unabhängig von der Zeitlänge des Sensordatensegmentes, $x_{i,d}^{(s)}$ ).

Beispielsweise kann die Sensordatensegmentrepräsentation für ein Sensordatensegment mittels einer (mehrköpfigen) (Standard) Aufmerksamkeitseinheit (MSA(Q,K,V) mit Abfrage Q, Schlüssel K und Wert V wie beispielsweise in Referenz [2]), welche einen gelernten sensordatensegment-spezifischen Parametervektor, $e_{CLS}^{Wert}$ , als Abfrage und das Sensordatensegment, $x_{i,d}^{(s)}$ , als Schlüssel und als Wert aufweist, ermittelt werden gemäß

$$V_{i,d} = MSA\left(e_{CLS}^{Wert}, x_{i,d}^{(s)}, x_{i,d}^{(s)}\right).$$

Anschaulich kann der sensordatensegment-spezifischen Parametervektor, $e_{CLS}^{Wert}$ , als Abfrage bei allen Sensordatensegmenten, $x_{i,d}^{(s)}$ , verwendet werden gemäß welchem das jeweilige Sensordatensegment, $x_{i,d}^{(s)}$ , auf die Sensordatensegmentrepräsentation, $V_{i,d}$, mit der festgelegten Dimension D abgebildet wird.

Obgleich MSA manchmal als Bezeichnung für "Multi-Head Self Attention" verwendet wird, bei denen die Abfrage, Q, der Schlüssel, K, und der Wert, V, gleich sind (also Q=K=V), wird verstanden, dass hierin MSA für mehrköpfige Standard-Aufmerksamkeitseinheit (kurz: mehrköpfige Standard-Aufmerksamkeit) verwendet wird und dass Q, K, und V auch voneinander verschieden sein können.

Das Lernen eines solchen Parametervektors, $e_{CLS}$, wird (für das Trainieren von Sprachmodellen) beispielsweise in J. Devlin et al.: "BERT: Pre-training of Deep Bidirectional Transformers for Language Understanding", ar-Xiv:1810.04805, 2019 (im Folgenden als Referenz [1] bezeichnet) beschrieben, in welcher der Parametervektors, $e_{CLS}$, als spezielles Klassifizierungs-Token, CLS, bezeichnet wird.

Der sensordatensegment-spezifische Parametervektor, $e_{CLS}^{Wert}$ , kann die Dimension, D, haben (also eine Anzahl von D Parametern aufweisen). Die hierin beschriebene Dimension D kann gemäß verschiedenen Aspekten von einem Benutzer einstellbar sein.

Das Eingabeelement, $Z_{i,d,0}$, kann unter Verwendung der Sensordatensegmentrepräsentation, $V_{i,d}$, einer zugehörigen Positionsrepräsentation, $e_{i,d}^t$ , und einer Textrepräsentation, $e_{i,d}^c$ , ermittelt werden, beispielsweise gemäß

$Z_{i,d,0} = V_{i,d} + e_{i,d}^t + e_{i,d}^c$ .

Die Textrepräsentation, $e_{i,d}^c$ , kann die zugehörige Textbeschreibung der physikalischen Größe, d, repräsentieren. Zum Beispiel kann die Steuervorrichtung 204 eingerichtet sein, einen Text-Encoder, $f(\cdot)$, zu implementieren, der eingerichtet ist, die Textbeschreibung (TB) auf eine Text-Einbettung, $e_{signal\_d}$, abzubilden (d.h. $e_{signal\_d} = f(TB)$). Der Text-Encoder $f(\cdot)$ kann beispielsweise als Encoder eines Sprachmodells trainiert worden sein. Die Steuervorrichtung 204 kann eingerichtet sein, die Text-Einbettung, $e_{signal\_d} \in \mathbb{R}^{D_{text}}$ , unter Verwendung einer (z.B. lernbaren $M \times D_{text}$-dimensionalen) Matrix, $E^c$, auf die Textrepräsentation, $e_{i,d}^c$ , abzubilden (d.h. $e_{i,d}^c = E^c e_{signal\_d}$ ). Anschaulich ist

$e_{i,d}^c$ ein Vektor, welcher von der Textbeschreibung der physikalischen Größe, d, abhängt. Die Verwendung der Textrepräsentation, $e_{i,d}^c$ , ermöglicht die direkte Anwendung eines vorhandenen Modells auf eine veränderte Menge physikalischer (Eingabe- und/oder Ausgabe-) Größen.

Die Positionsrepräsentation, $e_{i,d}^t$, kann in manchen Aspekten unter Verwendung einer vordefinierten Anzahl T von minimalen Zeitpunkten, die garantiert verfügbar innerhalb eines Segments (z.B. auf Grund minimaler Segmentlänge T) sind, ermittelt werden gemäß $e_{i,d}^t = f^{feste\ Zeitpunkte}\left(\{\tau_{k,i,d} | k = 1, ..., T\}\right)$ . Demgegenüber kann die Positionsrepräsentation, $e_{i,d}^t$ , vorteilhafterweise in anderen Aspekten mittels einer (mehrköpfigen) Aufmerksamkeitseinheit, MSA, ermittelt werden, welche einen gelernten positions-spezifischen Parametervektor, $e_{CLS}^t$ , als Abfrage und die zeitbezogenen Positionsinformationen, $\tau_{i,d}^{(s)}$ , als Schlüssel und als Wert aufweist, also

$$e_{i,d}^t = MSA\left(e_{CLS}^t, \tau_{i,d}^{(s)}, \tau_{i,d}^{(s)}\right).$$ Auf diese Weise weist Positionsrepräsentation, $e_{i,d}^t$ , zusätzliche Informationen auf, wodurch die Genauigkeit des maschinellen Lernmodells 212 erhöht wird. Wie der sensordatensegment-spezifische Parametervektor, $e_{CLS}^{Wert}$ , kann der positions-spezifische Parametervektor, $e_{CLS}^t$ , die Dimension, D, haben und für alle Sensordatensegmente verwendet werden.

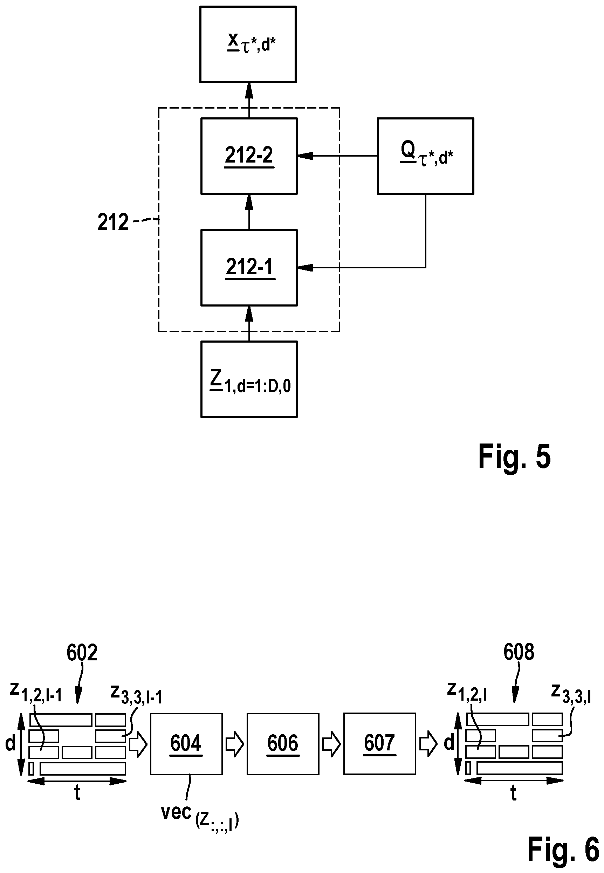

**FIG.5** zeigt ein Vorhersagen des Zeitverlaufs 214, $x_{\tau^*,d^*}$, der physikalischen Zielgröße, d* mittels des maschinellen Lernmodells 212 gemäß verschiedenen Aspekten.

Gemäß verschiedenen Aspekten kann das maschinelle Lernmodell 212 ein Transformer-Modell aufweisen oder sein. Das Transformer-Modell kann einen Encoder 212-1 und einen Decoder 212-2 aufweisen. Ein beispielhaftes Transformer-Modell wird in Y. Zhang et al.: "Crossformer: Transformer utilizing cross-dimension dependency for multivariate time series forecasting", International Conference on Learning Representations ICLR, 2022, 2019 (hierin als Referenz [2] bezeichnet) beschrieben. Allerdings erfordert das in Referenz [2] beschriebene Transformer-Modell zum Erreichen einer zufriedenstellenden Genauigkeit die Verwendung regelmäßiger multivariater Sensordaten (also gleiche Abtastraten, keine fehlenden Werte, etc.), da in Referenz [2] alle Segmentlängen gleich sein müssen und die Zeitinformation nicht berücksichtigt wird. Auch kann das in Referenz [2] beschriebene Transformer-Modell nur Zeitverläufe vordefinierter Zeitlängen vorhersagen, da die Positionscodierungen gelernt werden. Ferner ist (da keine Textbeschreibung verwendet wird) keine Adaption auf andere physikalische Größen möglich. Zum Zweck der Knappheit werden im Folgenden insbesondere Unterschiede zu dem in Referenz [2] beschriebenen Transformer-Modell beschrieben und für andere Aspekte wird auf Referenz [2] verwiesen.

Ein hierin beschriebener Encoder 212-1 und/oder Decoder 212-2 kann mehrere Aufmerksamkeitsschichten, $l$, aufweisen. Die Eingabeelemente, $Z_{i=1:Li,d,d=1:P,l=0}$, können einer ersten Aufmerksamkeitsschicht im Encoder 212-1, $l = 1$, zugeführt werden. Jede Aufmerksamkeitsschicht, $l$, kann eine Aufmerksamkeit, MSA, aufweisen, welche das Eingabeelemente, $Z_{i=1:Li,d,d=1:P,l-1}$, der Aufmerksamkeitsschicht, $l$, auf einen Ausgabevektor, $Z_{i=1:Li,d,d=1:P,l}$, abbildet gemäß $\bar{Z}_{i=1:Li,d,d=1:P,l} = MSA(Z_{i=1:Li,d,d=1:P,l-1}, Z_{i=1.Li,d,d=1:P,l-1}, Z_{i=1:Li,d,d=1:P,l-1})$. Der Ausgabevektor, $\bar{Z}_{i=1:Li,d,d=1:P,l}$, der Aufmerksamkeitsschicht, $l$, kann dann der Transformer-Architektur mit den Layer-Normen, Dropout, Überspringen von Verbindungen, Feed Forward, etc. folgen (siehe zum Beispiel Referenz [2]), wodurch das Ausgabeelement, $Z_{i=1:Li,d,d=1:P,l}$, der Aufmerksamkeitsschicht, $l$, ermittelt wird, welches dann das Eingabeelemente, $Z_{i=1:Li,d,d=1:P,l}$, der nachfolgenden Aufmerksamkeitsschicht, $l + 1$, ist. Anschaulich kann $\bar{Z}_{.,.,l}$ ein Zwischenergebnis innerhalb einer Aufmerksamkeitsschicht, $l$, angeben und $Z_{.,.,l}$ kann ein Ergebnis zwischen zwei aufeinanderfolgenden Aufmerksamkeitsschichten, $l, l + 1$, angeben.

Gemäß verschiedenen Aspekten kann jede Aufmerksamkeitsschicht, $l^*$, im Encoder 212-1 und/oder Decoder 212-2 genau eine Aufmerksamkeitseinheit (also eine einstufige Aufmerksamkeit), gefolgt von Layer-Normen, Dropout, Überspringen von Verbindungen, Feed Forward, etc.) aufweisen, welcher alle Eingabeelemente, $Z_{i=1:Li,d,d=1:P,l^*-1}$, zugeführt werden. Beispielsweise werden der ersten Aufmerksamkeitsschicht, $l = 1$, des Encoders 212-1 die Eingabeelemente, $Z_{i=1:Li,d,d=1:P,0}$, zugeführt. Der ersten Aufmerksamkeitsschicht des Decoders 212-2 können neben der Zielgrößen-Abfrage (Q) die Eingabeelemente, $Z_{i=1:Li,d,d=1:P,1}$, aus dem Encoder 212-1 zugeführt werden. Im Gegensatz dazu verwendet Referenz [2] eine zweistufige Aufmerksamkeit (sowohl im Encoder als auch im Decoder), in welcher die Zeit-Dimension (mit Zeit, $t$) in einer ersten Aufmerksamkeitseinheit (also der ersten Stufe) verarbeitet wird (gefolgt von Layer-Normen, Dropout, Überspringen von Verbindungen, Feed Forward, etc.) und die Kanal-Dimension in einer zweiten Aufmerksamkeitseinheit (also der zweiten Stufe) verarbeitet wird (ebenfalls gefolgt von Layer-Normen, Dropout, Überspringen von Verbindungen, Feed Forward, etc.). Dadurch, dass hierin die einstufige Aufmerksamkeit ($MSA^{osa}$) verwendet wird, können komplexere Abhängigkeiten zwischen den verschiedenen Sensordaten berücksichtigt werden. Beispielsweise können im Falle der zweistufigen Aufmerksamkeit Merkmale, die von Beobachtungen in verschiedenen Zeitabschnitten in verschiedenen Kanälen abhängen, nicht innerhalb einer Aufmerksamkeitsschicht gelernt werden (und damit in Inferenz nicht ausgenutzt werden).

**FIG.6** zeigt eine Aufmerksamkeitsschicht, *l*, mit einstufiger Aufmerksamkeitseinheit gemäß verschiedenen Aspekten. Hierbei können, in 604, alle (vorhandenen) Eingabeelemente, $Z_{i=1:Li,d,d=1:P,l-1}$, 602, mittels der Funktion *vec*() zusammengeführt (z.B. verkettet) werden. Die Verkettung $vec(\tilde{Z}_{:,:,l})$ kann dann der einstufigen Aufmerksamkeit 606 zugeführt werden, um als Zwischenergebnis den Ausgabevektor, $\tilde{Z}_{:,:,\ell}$, gemäß $\tilde{Z}_{:,:,\ell} = MSA^{osa}(vec(Z_{:,:,l-1}), vec(Z_{:,:,l-1}), vec(Z_{:,:,l-1}))$ zu erzeugen und dann durch Anwendung von Layer-Normen, Dropout, Überspringen von Verbindungen, Feed Forward, etc. (in 607) die Ausgabeelemente, $Z_{i=1:Li,d,d=1:P,l}$, 608, auszugeben.

Dadurch, dass die einstufige Aufmerksamkeit ($MSA^{osa}$) mit gemeinsamer Eingabe aller Eingabeelemente, $Z_{i=1:Li,d,d=1:P,l=0}$, verwendet wird, ist es nicht erforderlich, dass alle Sensordaten Zeitreihen sind. Beispielsweise kann sich ein Sensordatensegmente, $x_{i,d}^{(s)}$, auch auf einen skalaren Wert beziehen. Ein skalarer Wert kann zum Beispiel ein Wert eines globalen Systemparameters (z.B. als physikalische Größe) sein (z.B. eine Anfangsladekapazität einer Batterie). Beispielsweise kann, wie in FIG.6 dargestellt, auch ein Sensordatensegment, $x_{i,d}^{(s)}$, und damit deren Eingabeelement (im Beispiel von FIG.6 Eingabeelement $Z_{3,2,l-1}$) fehlen. Dies ist bei der zweistufigen Aufmerksamkeit nicht möglich, da dann Sensordaten für jeden Zeitabschnitt (gleicher Länge) erforderlich sind.

Mit Bezug auf FIG.5 können dann gemäß der Transformer-Architektur die mittels des Encoders 212-1 erzeugten Sequenz-Einbettungen nach *L* Aufmerksamkeitsschichten im Encoder, $Z_{i=1:Li,d,d=1:P,l=L}$, und zumindest eine Zielgrößen-Abfrage, $Q_{\tau*,d*}$, dem Decoder 212-2 zugeführt werden. Die Zielgrößen-Abfrage, $Q_{\tau*,d*}$, kann die zeitliche Position, $\tau*$, (z.B. einen Startzeitpunkt und einen Endzeitpunkt angebend) des vorherzusagenden Zeitverlaufs innerhalb des Zeitraums und die Textbeschreibung, TB, der physikalischen Zielgröße, d*, repräsentieren. Hierzu kann die Zielgrößen-Abfrage, $Q_{\tau*,d*}$, beispielsweise unter Verwendung der Positionsrepräsentation, $e_{\tau*,d*}^{t}$, und der Textrepräsentation, $e_{\tau*,d}^{c}$, ermittelt werden, zum Beispiel gemäß $Q_{\tau*,d*} = e_{\tau*,d*}^{t} + e_{\tau*,d}^{c}$. Gemäß verschiedenen Aspekten können dem Decoder 212-2 ein oder mehrere Zielgrößen-Abfragen, $Q_{n=1:N,t*n,d*n}$, zugeführt werden, von denen jede Zielgrößen-Abfrage, $Q_{n,t*n,d*n}$, die jeweilige zeitliche Position und eine jeweilige physikalische Zielgröße eines vorherzusagenden Zeitverlaufs angeben kann. Wie voranstehend beschrieben, kann der Decoder 212-2 auch mehrere Aufmerksamkeitsschichten, *l*, aufweisen. Der Decoder 212-2 kann dann die entsprechende Vorhersage, $x_{\tau*,d*}$, des Zeitverlaufs ausgeben. Hierzu kann der Decoder 212-2 beispielsweise eingerichtet sein, die entsprechende Vorhersage, $x_{i*,d*}$, mittels linearer Projektion der Ausgabeelemente zu ermitteln (z.B., wenn die Anzahl an Datenpunkten / die Zeitdauer der Vorhersage, $x_{i*,d*}$, dem zeitlichen Index i* entspricht). Gemäß verschiedenen Aspekten kann der Decoder 212-2 eine Aufmerksamkeitseinheit MSA implementieren, welche die zeitliche Position, $\tau*$, als Abfrage und die Ausgabeelemente als Wert und Schlüssel verwendet, um eine beliebige Zeitdauer der Vorhersage zu ermöglichen.

Gemäß verschiedenen Aspekten kann jede Aufmerksamkeitsschicht, *l*, im Encoder 212-1 und/oder im Decoder 212-2, ähnlich wie in Referenz [2], einen Weiterleitungs-(Routing-) Mechanismus implementieren. Bei dem Weiterleitungs-Mechanismus wird jede Aufmerksamkeitseinheit, $MSA^{osa}$, in eine erste Subeinheit, $MSA_1^{osa}$, und eine zweite Subeinheit, $MSA_2^{osa}$, aufgeteilt, wobei die erste Subeinheit, $MSA_1^{osa}$, Zwischenmerkmale, $B_{1:N,l}$, ausgibt gemäß $B_{1:N,l} = MSA_1^{osa}(Q_{1:N,t*n,d*n}, vec(Z_{:,:,l-1}), vec(Z_{:,:,l-1}))$ und wobei die zweite Subeinheit, $MSA_2^{osa}$, diese Zwischenmerkmale, $B_{1:N,l}$, als Schlüssel und als Wert verwendet gemäß $\tilde{Z}_l = MSA_2^{osa}(vec(Z_{:,l-1}), B_{1:N,l}, B_{1:N,l})$. Im Gegensatz zu dem Weiterleitungs-Mechanismus der Referenz [2] werden aber keine Weiterleitungsvariablen (in Referenz [2] bezeichnet als $R_{i,:}$) als Abfragen gelernt, sondern die ein oder mehreren Zielgrößen-Abfragen, $Q_{n=1:N,t*n,d*n}$, dienen als Abfrage der ersten Subeinheit, $MSA_1^{osa}$. Anschaulich kann der Encoder 212-1 und/oder der Decoder 212-2 einen Abfrage-basierte Weiterleitungs-Mechanismus implementieren. Gemäß verschiedenen Aspekten kann der hierin beschriebene Abfrage-basierte Weiterleitungs-Mechanismus auch im Encoder 212-1 implementiert sein.

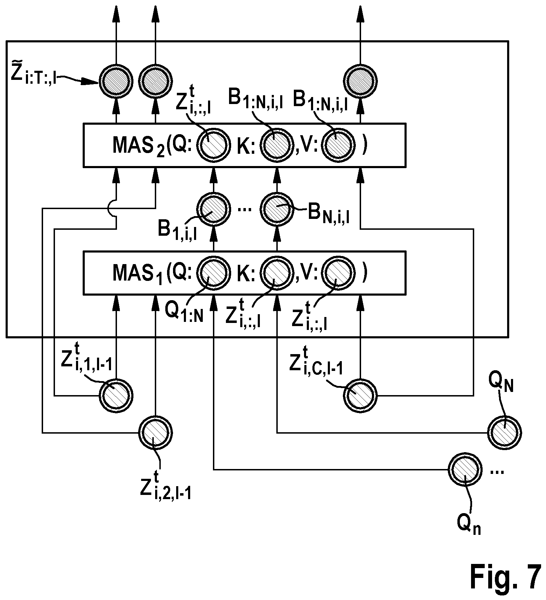

Der Weiterleitungs-Mechanismus ist zur Veranschaulichung in **FIG.7** beispielhaft für eine zweistufige Aufmerksamkeitseinheit dargestellt. Es wird verstanden, dass dies aufgrund der verringerten Anzahl an Eingabeelementen (in diesem Beispiel der Zeit-Dimension, t) lediglich der Veranschaulichung dient und dass der Decoder 212-2 wie auch der Encoder 212-1 eine einstufige Aufmerksamkeit verwendet, wie hierin erläutert.

Der Abfrage-basierte Weiterleitungs-Mechanismus in Verbindung mit der einstufigen Aufmerksamkeit ermöglicht eine Verringerung der Komplexität des maschinellen Lernmodells 212. Dadurch kann dieses beispielsweise mit verringertem Rechenaufwand trainiert werden (oder worden sein) (da beispielsweise keine Weiterleitungsvariablen zu lernen sind). Durch die Integration der Informationen zur Zielgröße (mittels der Textbeschreibung und Zeitreferenz) in die Zielgrößen-Abfrage(n) werden ferner bessere Einbettungen erzeugt, was zu einer höheren Genauigkeit des maschinellen Lernmodells 212 führt. Auch können Zeitreihen von Sensordaten vergleichsweise lange Zeitspannen beinhalten, so dass die Verringerung der Komplexität der Aufmerksamkeit zur Erhöhung der Recheneffizienz führt.

Obgleich gemäß verschiedenen Aspekten auf die Vorhersage des Zeitverlaufs der physikalischen Zielgröße Bezug genommen wird, wird verstanden, dass mittels des hierin beschriebenen maschinellen Lernmodells auch eine Anomalie vorhergesagt werden. In einem Beispiel kann die Anomalie auch anhand des vorhergesagten Zeitverlaufs der physikalischen Zielgröße ermittelt werden. Beispielsweise kann eine Anomalie erkannt werden, indem ermittelt wird, dass die Vorhersage des Zeitverlaufs der physikalischen Größen der Abfrage dem Zeitverlauf der physikalischen Größen der Eingabe gleichen und der Rekonstruktionsfehler der Eingabe kann bewertet werden. Ist der Rekonstruktionsfehler beispielsweise größer als oder gleich einem Schwellenwert, kann die Eingabe als Anomalie ermittelt werden.

## Patentansprüche

1.  Verfahren (100) zum Vorhersagen eines Zeitverlaufs (214) einer physikalischen Zielgröße mittels eines maschinellen Lernmodells (212), das Verfahren (100) aufweisend:
    Bereitstellen (102) multivariater Sensordaten, die einem Zeitraum zugeordnet sind und für jede physikalische Größe einer Vielzahl von physikalischen Größen jeweilige Sensordaten (210) aufweisen, welche einen Zeitverlauf der physikalischen Größe in dem Zeitraum repräsentieren, wobei jeder physikalischen Größe eine jeweilige Textbeschreibung zugeordnet ist, welche die physikalische Größe beschreibt;

    für jede physikalische Größe der Vielzahl von physikalischen Größen (104):

    • Aufteilen der jeweiligen Sensordaten in eine jeweilige Vielzahl von Sensordatensegmenten;
    • für jedes Sensordatensegment der Vielzahl von Sensordatensegmenten:

    ○ Ermitteln einer jeweiligen Sensordatensegmentrepräsentation, welche das Sensordatensegment repräsentiert und welche (unabhängig von der Anzahl an Datenpunkten des Sensordatensegmentes) eine vordefinierte Dimension aufweist,
    ○ Ermitteln eines jeweiligen Eingabeelementes unter Verwendung der jeweiligen Sensordatensegmentrepräsentation, zeitbezogener Positionsinformationen, welche eine Position des Sensordatensegments innerhalb des Zeitraums repräsentieren, und der jeweiligen Textbeschreibung der physikalischen Größe;

    Vorhersagen (106) des Zeitverlaufs (214) der physikalischen Zielgröße mittels des maschinellen Lernmodells (212) in Reaktion auf eine Eingabe aller Eingabeelemente und mindestens einer Zielgrößen-Abfrage, welche eine Position des vorherzusagenden Zeitverlaufs (214) innerhalb des Zeitraums und eine Textbeschreibung der physikalischen Zielgröße repräsentiert, in das maschinelle Lernmodell (212).

2.  Verfahren (100) gemäß Anspruch 1,
    wobei die jeweilige Vielzahl von Sensordatensegmenten zumindest einer physikalischen Größe zumindest zwei Sensordatensegmente mit einer voneinander verschiedenen Anzahl an Datenpunkten aufweist.

3.  Verfahren (100) gemäß Anspruch 1 oder 2,
    wobei die zeitbezogenen Positionsinformationen einen Startzeitpunkt und einen Endzeitpunkt innerhalb des Zeitraums repräsentieren.

4.  Verfahren (100) gemäß einem der Ansprüche 1 bis 3,
    wobei das maschinelle Lernmodell (212) ein Transformer-Modell aufweist, dessen Encoder (212-1) und/oder Decoder (212-2) eine Aufmerksamkeitsschicht aufweist, welcher alle Eingabeelemente zugeführt werden.

5.  Verfahren (100) gemäß einem der Ansprüche 1 bis 4,
    wobei die jeweilige Sensordatensegmentrepräsentation für ein Sensordatensegment mittels einer Aufmerksamkeitseinheit, welche einen gelernten sensordatensegment-spezifischen Parametervektor als Abfrage und das Sensordatensegment als Schlüssel und als Wert aufweist, ermittelt wird; und/oder wobei das jeweilige Eingabeelement unter Verwendung der jeweiligen Sensordatensegmentrepräsentation, einer jeweiligen Positionsrepräsentation und der jeweiligen Textbeschreibung der physikalischen Größe ermittelt wird, wobei die Positionsrepräsentation mittels einer Aufmerksamkeitseinheit, welche einen gelernten positions-spezifischen Parametervektor als Abfrage und die zeitbezogenen Positionsinformationen als Schlüssel und als Wert aufweist, ermittelt wird.

6.  Verfahren (100) gemäß einem der Ansprüche 1 bis 5,

wobei das maschinelle Lernmodell (212) ein Transformer-Modell aufweist, dessen ein oder mehreren Aufmerksamkeitsschichten im Encoder (212-1) und/oder Decoder (212-2) eine Aufmerksamkeitseinheit aufweist, welcher die Zielgrößen-Abfrage zugeführt wird.

7. System (200), aufweisend:

• eine Vorrichtung (202), die eingerichtet ist, den technischen Prozess auszuführen;
• ein oder mehrere Sensoren (208) zum Erfassen der multivariaten Sensordaten (210); und
• eine Steuervorrichtung (204), die eingerichtet ist, den Zeitverlauf (214) der physikalischen Zielgröße gemäß einem der Ansprüche 1 bis 6 vorherzusagen und den technischen Prozess unter Berücksichtigung der Vorhersage zu steuern.

8. Datenverarbeitungseinheit, die eingerichtet ist, das Verfahren gemäß einem der Ansprüche 1 bis 6 auszuführen.

9. Computerprogramm mit Befehlen, die, wenn sie durch einen Prozessor ausgeführt werden, bewirken, dass der Prozessor das Verfahren (100) gemäß einem der Ansprüche 1 bis 6 durchführt.

10. Computerlesbares Medium, das Befehle speichert, die, wenn sie durch einen Prozessor ausgeführt werden, bewirken, dass der Prozessor das Verfahren (100) gemäß einem der Ansprüche 1 bis 6 durchführt.

**Geänderte Patentansprüche gemäss Regel 137(2) EPÜ.**

1. Verfahren (100) zum Steuern eines technischen Prozesses, das Verfahren (100) aufweisend:

Bereitstellen (102) multivariater Sensordaten, die einem Zeitraum zugeordnet sind und für jede physikalische Größe einer Vielzahl von physikalischen Größen jeweilige Sensordaten (210) aufweisen, welche einen Zeitverlauf der physikalischen Größe in dem Zeitraum repräsentieren, wobei jeder physikalischen Größe eine jeweilige Textbeschreibung zugeordnet ist, welche die physikalische Größe beschreibt; für jede physikalische Größe der Vielzahl von physikalischen Größen (104):

• Aufteilen der jeweiligen Sensordaten in eine jeweilige Vielzahl von Sensordatensegmenten;
• für jedes Sensordatensegment der Vielzahl von Sensordatensegmenten:

○ Ermitteln einer jeweiligen Sensordatensegmentrepräsentation, welche das Sensordatensegment repräsentiert und welche (unabhängig von der Anzahl an Datenpunkten des Sensordatensegmentes) eine vordefinierte Dimension aufweist,
○ Ermitteln eines jeweiligen Eingabeelementes unter Verwendung der jeweiligen Sensordatensegmentrepräsentation, zeitbezogener Positionsinformationen, welche eine Position des Sensordatensegments innerhalb des Zeitraums repräsentieren, und der jeweiligen Textbeschreibung der physikalischen Größe;

Vorhersagen (106) eines Zeitverlaufs (214) einer physikalischen Zielgröße mittels eines maschinellen Lernmodells (212) in Reaktion auf eine Eingabe aller Eingabeelemente und mindestens einer Zielgrößen-Abfrage, welche eine Position des vorherzusagenden Zeitverlaufs (214) innerhalb des Zeitraums und eine Textbeschreibung der physikalischen Zielgröße repräsentiert, in das maschinelle Lernmodell (212); und

Steuern des technischen Prozesses unter Berücksichtigung der Vorhersage.

2. Verfahren (100) gemäß Anspruch 1,

wobei die jeweilige Vielzahl von Sensordatensegmenten zumindest einer physikalischen Größe zumindest zwei Sensordatensegmente mit einer voneinander verschiedenen Anzahl an Datenpunkten aufweist.

3. Verfahren (100) gemäß Anspruch 1 oder 2,
wobei die zeitbezogenen Positionsinformationen einen Startzeitpunkt und einen Endzeitpunkt innerhalb des Zeitraums repräsentieren.

4. Verfahren (100) gemäß einem der Ansprüche 1 bis 3,

wobei das maschinelle Lernmodell (212) ein Transformer-Modell aufweist, dessen Encoder (212-1) und/oder Decoder (212-2) eine Aufmerksamkeitsschicht aufweist, welcher alle Eingabeelemente zugeführt werden.

5. Verfahren (100) gemäß einem der Ansprüche 1 bis 4,

wobei die jeweilige Sensordatensegmentrepräsentation für ein Sensordatensegment mittels einer Aufmerksamkeitseinheit, welche einen gelernten sensordatensegmentspezifischen Parametervektor als Abfrage und das Sensordatensegment als Schlüssel und als Wert aufweist, ermittelt wird; und/oder
wobei das jeweilige Eingabeelement unter Verwendung der jeweiligen Sensordatensegmentrepräsentation, einer jeweiligen Positionsrepräsentation und der jeweiligen Textbeschreibung der physikalischen Größe ermittelt wird, wobei die Positionsrepräsentation mittels einer Aufmerksamkeitseinheit, welche einen gelernten positionsspezifischen Parametervektor als Abfrage und die zeitbezogenen Positionsinformationen als Schlüssel und als Wert aufweist, ermittelt wird.

6. Verfahren (100) gemäß einem der Ansprüche 1 bis 5,
wobei das maschinelle Lernmodell (212) ein Transformer-Modell aufweist, dessen ein oder mehreren Aufmerksamkeitsschichten im Encoder (212-1) und/oder Decoder (212-2) eine Aufmerksamkeitseinheit aufweist, welcher die Zielgrößen-Abfrage zugeführt wird.

7. System (200), aufweisend:

• eine Vorrichtung (202), die eingerichtet ist, den technischen Prozess auszuführen;
• ein oder mehrere Sensoren (208) zum Erfassen der multivariaten Sensordaten (210); und
• eine Steuervorrichtung (204), die eingerichtet ist, den technischen Prozess gemäß einem der Ansprüche 1 bis 6 zu steuern.

8. Steuervorrichtung, die eingerichtet ist, das Verfahren gemäß einem der Ansprüche 1 bis 6 auszuführen.

9. Computerprogramm mit Befehlen, die, wenn sie durch einen Prozessor ausgeführt werden, bewirken, dass der Prozessor das Verfahren (100) gemäß einem der Ansprüche 1 bis 6 durchführt.

10. Computerlesbares Medium, das Befehle speichert, die, wenn sie durch einen Prozessor ausgeführt werden, bewirken, dass der Prozessor das Verfahren (100) gemäß einem der Ansprüche 1 bis 6 durchführt.

100

```
┌─────────────────┐
│       102       │
└─────────────────┘
         │
         ▼
┌─────────────────┐
│       104       │
└─────────────────┘
         │
         ▼
┌─────────────────┐
│       106       │
└─────────────────┘
```

**Fig. 1**

200

```
                    ┌───────────────────────┐
              ┌────▶│          202          │
              │     │                        │
              │     │  ┌──────────────────┐  │
              │     └──│   208(d=1-P)     │──┼──────────┐
              │        └──────────────────┘  │          │
              │                               │          │
              │                                          │
  ┌ ─ ─ ─ ─ ─ ┼─ ─ ─ ─ ─ ─ ─ ─ ─ ─ ─ ─ ─ ─ ─ ─ ─ ─ ─ ─ ┼ ─ ─ ┐
  │           │                                          ▼     │
  │      ┌────┴───┐   ┌────────┐   ┌────────┐   ┌──────────────┐
  │      │  206   │◀──│  214   │◀──│  212   │◀──│  210(d=1-P)  │ │
  │      └────────┘   └────────┘   └────────┘   └──────────────┘
  └ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
                              │
                            204
```

**Fig. 2**

Fig. 3

Fig. 4

$$\underline{X}_{\tau*,d*}$$

$$\underline{212\text{-}2}$$

$$\underline{Q}_{\tau*,d*}$$

212

$$\underline{212\text{-}1}$$

$$\underline{Z}_{1,d=1:D,0}$$

# Fig. 5

602

$z_{1,2,l-1}$    $z_{3,3,l-1}$

d

t

$$\underline{604}$$

$\text{vec}_{(Z_{:,:,l})}$

$$\underline{606}$$

$$\underline{607}$$

608

$z_{1,2,l}$    $z_{3,3,l}$

d

t

# Fig. 6

Fig. 7

Europäisches
Patentamt

European
Patent Office

Office européen
des brevets

# EUROPÄISCHER RECHERCHENBERICHT

Nummer der Anmeldung

EP 24 21 0615

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TANG PEIWANG ET AL: "MTSMAE: Masked Autoencoders for Multivariate Time-Series Forecasting", 2022 IEEE 34TH INTERNATIONAL CONFERENCE ON TOOLS WITH ARTIFICIAL INTELLIGENCE (ICTAI), IEEE, 31. Oktober 2022 (2022-10-31), Seiten 982-989, XP034330430, DOI: 10.1109/ICTAI56018.2022.00150 [gefunden am 2023-04-18] * Seite 982, Spalte 2, Absatz 2 - Absatz 4; Abbildungen 1,3 * * Seite 985, Spalte 1, Absatz 1 * ----- | 1-10 | INV. G06N3/045 G06N3/08 G06N3/084 |
| X | SARAH ALNEGHEIMISH ET AL: "Large language models can be zero-shot anomaly detectors for time series?", ARXIV.ORG, CORNELL UNIVERSITY LIBRARY, 201 OLIN LIBRARY CORNELL UNIVERSITY ITHACA, NY 14853, 12. August 2024 (2024-08-12), XP091841476, * Seite 2 - Seite 6 * ----- | 1-10 | |
| A | RAED ABDEL-SATER ET AL: "A federated large language model for long-term time series forecasting", ARXIV.ORG, CORNELL UNIVERSITY LIBRARY, 201 OLIN LIBRARY CORNELL UNIVERSITY ITHACA, NY 14853, 30. Juli 2024 (2024-07-30), XP091835045, * das ganze Dokument * ----- | 1-10 | |

RECHERCHIERTE SACHGEBIETE (IPC)

G06N

Der vorliegende Recherchenbericht wurde für alle Patentansprüche erstellt

| Recherchenort | Abschlußdatum der Recherche | Prüfer |
|---|---|---|
| München | 21. März 2025 | Koblitz, Birger |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J. DEVLIN et al.** BERT: Pre-training of Deep Bidirectional Transformers for Language Understanding. *arXiv:1810.04805*, 2019

- **Y. ZHANG et al.** Crossformer: Transformer utilizing cross-dimension dependency for multivariate time series forecasting. *International Conference on Learning Representations ICLR*, 2019